Europäisches Patentamt

European Patent Office

Office européen des brevets

(19)

(11) Publication number: **0 250 052 B1**

(12) **EUROPEAN PATENT SPECIFICATION**

(45) Date of publication of the patent specification: 08.08.90

(51) Int. Cl.⁵: **C09D 167/06**, C08J 7/04, C08G 18/42

(21) Application number: 87201140.8

(22) Date of filing: 16.06.87

(54) Process for coating a synthetic substrate with a primer and a top coat, and the primers to be used in said process.

(30) Priority: 19.06.86 NL 8601591

(43) Date of publication of application: 23.12.87 Bulletin 87/52

(45) Publication of the grant of the patent: 08.08.90 Bulletin 90/32

(84) Designated Contracting States: AT BE CH DE ES FR GB GR IT LI LU NL SE

(56) References cited:
EP-A- 0 138 587
EP-A- 0 166 962
GB-A- 1 010 472
US-A- 4 533 703

(73) Proprietor: AKZO N.V., Velperweg 76, NL-6824 BM Arnhem(NL)

(72) Inventor: Maier, Walter, Widmaierstrasse 90, D-7000 Stuttgart 80(DE)
Inventor: Orth, Manfred, Breslauer Strasse 9, D-7141 Schwieberdingen(DE)

(74) Representative: Sieders, René et al, AKZO N.V. Patent Department (Dept. CO) P.O. Box 9300, NL-6800 SB Arnhem(NL)

## Description

The invention relates to a process for coating a synthetic substrate with a primer and a top coat by successively applying to the substrate a primer and a baking top coating composition and curing these coats by heating the coated synthetic substrate to a temperature of 80°C-140°C.

Synthetic materials are increasingly used in the automobile industry for the manufacture of car body components, such as hoods, side panels and boot lids because they permit obtaining lighter vehicles which are more economical in use on account of their lower fuel consumption, and manufacturing more complex components. To reduce the cost of manufacture and to avoid color differences there is further the increasing desire for these synthetic components to be provided with a top coat at the same time as the metal parts of the chassis and the body of the motorcar. It is therefore necessary that is should be possible for the baking top coats suitable or normally used for the metal parts also to be successfully applied to the parts of synthetic material. It has been found, however, that when these finishing paints are applied to the normally used primer the resulting coated synthetic substrate will have unsatisfactory mechanical properties, notably at low temperature, e.g. at about -20°C.

The invention has for its object to provide a primer system which permits the application of the top coats that are commonly applied in the automobile industry to automobile components of synthetic materials without the flexibility and the impact strength at low temperature being detracted.

It should be added that British Patent No. 1,010,472 describes a thixotropic composition based on a partly cured polyester which can be used as floor or furniture polish.

The examples disclose compositions based on 1 polyester polyol or on 4 different polyester polyols. So these literature references do not suggest at all to the man skilled in the art that a specific combination of 3 different polyester polyols, applied in two coatings to a synthetic substrate, produces coated substrates possessing excellent properties at low temperature.

The process according to the invention is characterized in that a first primer coating is applied in a thickness of 10-50μm, of which after curing the ratio between the logarithm to base 10 of the elasticity modulus at 0°C and 50°C and that at -60°C is in the range of 0,65-0,84 and 0,50-0,65, respectively, and a second primer coating is applied in a thickness of 10-50μm, of which after curing the ratio between the logarithm to base 10 of the elasticity modulus at 0°C and 50°C and that at -60°C is in the range of 0,85-0,95 and 0,55-0,75 respectively.

The measurements of the elasticity modulus of the samples are carried out with a Rheovibron apparatus (type DDV-II-C, manufactured by Toyo Baldwin, Japan) at a frequency of 11 Hz, a dynamic strain of 0,03% of the original strength of the sample and using a ratio of static stress to amplitude of dynamic stress of 5.

As examples of suitable synthetic materials that may be coated by the process according to the invention may be mentioned pretreated or non-pretreated, reinforced or non-reinforced polyethylene, polypropylene, polyamide, polyester elastomer, polyphenylene oxide, polycarbonate, polyurethane, polyethylene terephthalate, polybutylene terephthalate or mixtures of the polymers envisaged here.

As examples of suitable baking top coating compositions may be mentioned those that are based on one or more polyester resins: ester diols; alkyd resins modified or not with oil; 1-component polyurethanes, 2-component polyurethanes; acrylate or methacrylate resins; epoxy resins modified or not with oil; copolymers of a (meth)acrylate monomer, styrene and/or vinyl chloride; drying or non-drying oils, stand oil and other synthetic or natural resins. Use also may be made of mixtures of 2 or more of the binders referred to here. Said binders are entirely known to the person skilled in the art and need not be further described here. The binders usually contain hydroxyl groups and are cured by using a suitable curing agent such as an aminoplast or a blocked polyisocyanate. Suitable examples of such curing agents will be specifically mentioned hereinafter.

It is preferred that the first primer should contain a binder based on:

A. a linear polyester polyol having a hydroxyl content of 0,8-2,0% by weight and a hydroxyl equivalent weight of 850-2100,

B. a branched polyester polyol having a hydroxyl content of 4,0-6,0% by weight and a hydroxyl equivalent weight of 280-420, and

C. a branched polyester polyol having a hydroxyl content of 8,0-10,0% by weight and a hydroxyl equivalent weight of 170-210

in a weight ratio of A:B of 5-10 and of B:C of 0,7-1,5 and pigment in an amount such that the primer has a pigment volume concentration of 15-35%, the primer containing a curing agent for the components A, B and C in an amount such that the molar ratio between the reactive groups of the curing agent and those of the components A, B and C is the range of 0,5 to 0,9.

It is preferred that the second primer should contain a binder based on:

A. a linear polyester polyol having a hydroxyl content of 0,8-2,0% by weight and a hydroxyl equivalent weight of 850-2100,

B. a branched polyester having a hydroxyl content of 4,0-6,0% by weight and a hydroxyl equivalent weight of 280-420, and

C. a branched polyester polyol having a hydroxyl content of 8,0-10,0% by weight and a hydroxyl equivalent weight of 170-210

in a weight ratio of A:B of 2-3 and of B:C of 0,7-1,5 and pigment in an amount such that the primer has a pigment volume concentration of 5-30%, the primer containing a curing agent for

The linear polyester polyol A that may be used in the primers according to the invention is built up from a dicarboxylic acid containing 2-26 carbon atoms and a dihydroxy compound containing 2-12 carbon atoms.

Suitable dicarboxylic acids are aliphatic, cycloaliphatic or aromatic dicarboxylic acids such as oxalic acid, malonic acid, succinic acid, glutaric acid ,adipic acid, azelaic acid, sebacic acid, maleic acid, fumaric acid, itaconic acid, citraconic acid, tetrahydrophthalic acid, endomethylene tetrahydrophthalic acid, hexahydrophthalic acid, phthalic acid, p-carboxymethylbenzoic acid, dichlorophthalic acid, naphthalene 2,6-dicarboxylic acid and/or diphenyl-o,o'-dicarboxylic acid. Also suitable are the anhydrides or the esters, preferably alkyl esters, more particularly those of which the alkyl group contains 1-4 carbon atoms, of the above-envisaged dicarboxylic acids. As examples of suitable anhydrides or esters may be mentioned succinic anhydride, maleic anhydride, tetrahydrophthalic anhydride or dimethyl terephthalate. It is preferred that a dicarboxylic acid having 3-14 carbon atoms should be used, more particularly adipic acid, optionally in combination with a benzene dicarboxylic acid, such as phthalic acid.

Suitable dihydroxy compounds are, int.al., ethylene glycol, 1,2-propane diol, 1,3-propane diol, 2,2-dimethyl propane diol, 1,2-butane diol, 1,3-butane diol, 1,4-butane diol, 1,6-hexane diol, diethylene glycol, triethylene glycol, dipropylene glycol, 2-ethylhexane diol-1,3, 2-ethylhexane diol-1-6, 2,2,4-trimethylhexane diol, 2,4,4-trimethylhexane diol, 1,8-octane diol and/or 1,4-bis (hydroxymethyl)cyclohexane. It is preferred that use should be made of a dihydroxy compound containing 2-9 carbon atoms. By a dihydroxy compound is also to be understood here a monoepoxy compound, such as ethene oxide, propene oxide or butene oxide. According to the invention the polyester polyol A preferably has a hydroxyl content of 1,0-1,5% by weight and a hydroxyl equivalent weight of 1130-1700.

The two other polyester polyols B and C that can be used in the primers according to the invention may be built up from one or more of the afore-mentioned dicarboxylic acids and dihydroxy compounds used for the preparation of the polyester polyol A. Use is then made of a higher functional carboxyl compound or preferably a higher functional hydroxyl compound in an amount such that the two polyester polyols B and C have the required hydroxyl content and a hydroxyl equivalent weight. It is preferred that the polyester polyol C should be built up from exclusively a triol as hydroxyl compound.

As suitable higher functional carboxyl groups may be mentioned trimellitic acid, trimellitic anhydride, trimesitinic acid and citric acid.

As suitable higher functional hydroxyl compounds may be mentioned glycerol, trimethylol ethane, trimethylol propane, pentaerythritol and dipentaerythritol.

It is preferred that the polyester polyol B should have a hydroxyl content of 5,0-5,5% by weight and/or a hydroxyl equivalent weight of 310-340. It is preferred that the polyester polyol C should have a hydroxyl content of 8,5-9,0% by weight and/or a hydroxyl equivalent weight of 170-200. The polyester polyols A, B and C used in the two primers need, of course, not have the same chemical composition, neither in the same primer nor with respect to that in the other primer.

The polyester polyols that can be used according to the invention may be prepared in any suitable manner. For instance, one or more hydroxyl compounds and/or epoxy compounds in a suitable ratio may be brought into reaction with one or more carboxylic acids, an anhydride and/or an ester thereof in order to obtain the polyester polyol having the characteristics as defined in the claims. The esterification reaction is carried out at elevated temperature, for instance at 115°C to 250°C, in the presence, if desired, of one or more organic solvents, such as toluene or xylene. In the reaction there will generally be present an esterification catalyst in the usual concentration. The catalyst may be of the usual type, for instance an acid catalyst such as p-toluene sulphonic acid, a basic compound such as an amine or compounds such as zinc oxide, tetraisopropyl orthotitanate and triphenyl benzyl phosphonium chloride.

According to the invention the two primers preferably contain one or more pigments in such a concentration that the first primer has a pigment volume concentration of 15-35%, preferably 19-29%, and the second primer has a pigment volume concentration of 5-30%, preferably 9-27%. Examples of suitable pigments include flake-like pigments such as mica (magnesium silicate), sodium silicate, talc, quartz in platelet form, aluminium silicate.aq, and metallic pigments such as metallic aluminium, nickel and stainless steel. Optionally, other pigments may be used in an amount not higher than 5% by weight, based on the total amount of pigment. The primers may optionally contain an electrically conductive carbon black. The two primers may or may not contain the same pigments in the same or not in the same ratio.

According to the invention the two primers preferably contain a curing agent which is selected from the afore-mentioned group of curing agents that are also used in the top coating composition. However, it is not necessary at all that in some particular case the curing agent in the top coating composition should be identical with that in one or both primers. The curing agent is preferably contained in the primers in an amount such that the molar ratio of the reactive groups of the curing agent to that of the preferably used polyester polyols A, B and C in the first primer is in the range of 0,6 to 0,7 and in the second primer 1,4 to 1,6.

Examples of suitable curing agents include n-methylol groups- and/or N-methylol ether groups-containing aminoplasts that may be obtained by reacting an aldehyde, for instance formaldehyde, with an amino groups- or amido groups-containing compound such as melamine, urea, N,N'-ethylene urea, dicyandiamide and benzoguanamine; for the preparation of these compounds reference may be made to Houben-Weyl, Methoden der organischen Chemie;

Volume 14/2, pp. 319-371 (1963). It is preferred that the above-described compounds should partly or entirely be etherified with alcohols containing 1-6 carbon atoms, for instance with methanol, ethanol, n-propanol, isopropanol, n-butanol, isobutanol, amyl alcohol, hexanol or mixtures of the above-envisaged alcohols. Particularly, use may be made of a methylol melamine having 4 to 6 methylol groups per molecule of melamine, at least 3 methylol groups being etherified with methanol, ethanol, a propanol or with a butanol, or a butanol-etherified condensation product of formaldehyde and N,N'-ethylene diurea. More particularly, use may be made of a hexa-alkoxymethyl melamine, with the alkoxy group containing 1 to 4 carbon atoms. Preferably, as a curing agent for the polyesterpolyols is used a blocked or unblocked isocyanurate compound or a blocked or unblocked aliphatic, cycloaliphatic or aromatic di-, tri- or polyvalent isocyanate. As examples of suitable isocyantes may be mentioned hexamethylene diisocyanate, 2,4,4-trimethyl 1,6-hexane diisocyanate, cyclohexane-1,4-diisocyanate, isophoron diisocyanate, the adduct of 1 molecule of 1,4-butane diol and 2 molecules of isophoron diisocyanate, the adduct of 1 molecule of 1,4-butane diol and 2 molecules of hexamethylene diisocyanate, dicyclohexyl methane-4,4'-diisocyanate, xylylene diisocyanate, 1,3,5-trimethyl-bis(2,4-isocyanatomethyl)benzene, toluene diisocyanate, diphenyl methane-4,4'-diisocyanate, the adduct of 3 molecules of hexamethylene diisocyanate and 1 molecule of water, the adduct of 1 molecule of trimethylol propane and 3 molecules of isophoron diisocyanate, the adduct of 1 molecule of trimethylol propane and 3 molecules of toluene diisocyanate and the adduct of 1 molecule of pentaerythritol and 4 molecules of hexamethylene diisocyanate. For blocking the isocyanate or isocyanurate compound use may be made of any usual or suitable blocking agent.

One primer or both primers may optionally contain usual adjuvants and additives, for instance polymers, such as at least partly hydrolysed vinyl chloride-vinyl acetate copolymers, adhesion improving agents, pigment dispersing agents, sag control agents, levelling agents, solvents and curing accelerators.

Examples of suitable solvents include ethyl acetate, butyl acetate, ethylglycol acetate, hexyl acetate, methoxy propyl acetate, methoxy butyl acetate, methylethyl ketone, methylisobutyl ketone, cyclohexanone, methoxyhexanone, methylene chloride or trichloroethylene or tetrachloroethylene, or mixtures thereof, or optionally mixed with a hydrocarbon such as toluene or xylene. The primers generally have a solids content of 30-60% by weight.

The primers and the top coating composition may be applied to the pretreated or non-pretreated synthetic substrate for instance by roller coating, spraying, brushing, sprinkling, flow coating, dipping or electrostatic spraying. It is preferred that the second primer be applied immediately after the first primer has been applied, or after initial drying or further curing of the first primer. It is preferred that the primers should be applied by spraying and the top coating composition electrostatically. The synthetic substrate treated according to the method of the invention with the two primers and a top coat is generally heated for 5-60 minutes to a temperature of 80°-140°C.

The invention also relates to a primer based on

A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420, and
C. a branched polyester polyol having a hydroxyl content of 8,0-10,0% by weight and a hydroxyl equivalent weight of 170-210

in a weight ratio of A:B of 5-10 and of B:C of 0,7-1,5 and pigment in an amount such that the primer has a pigment volume concentration of 15-35%,.

Finally, the invention relates to a primer based on

A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420 and
C. a branched polyester polyol having a hydroxyl content of 8,0-10,0% by weight and a hydroxyl equivalent weight of 170-210

in a weight ratio of A:B of 2-3 and of B:C of 0,7-1,5 and pigment in an amount such that the primer has a pigment volume concentration of 5-30%,.

The invention will be further described in the following examples.

As representative examples of the polyester polyols A, B and C were chosen, respectively, a linear polyester diol I having a hydroxyl content of 1,2% by weight and a hydroxyl equivalent weight of 1418 (available from Bayer under the trademark Desmophen 1700), a branched polyester polyol II having a hydroxyl content of 5,2% by weight and a hydroxyl equivalent weight of 327 (available from Bayer under the trademark Desmophen 1200), and a branched polyester polyol III having a hydroxyl content of 8,8% by weight and a hydroxyl equivalent weight of 193 (available from Bayer under the trademark Desmophen 800). As curing agent for the polyester polyols was used in each case a 75% by weight solution of the adduct of 3 molecules of hexamethylene diisocyanate and 1 molecule of water in a mixture of equal parts by weight of xylene and ethyl glycol acetate.

As representative pigment was used talc, which was mixed with titanium dioxide in some cases.

As solvent was used a mixture of butyl acetate, xylene and methoxy propyl acetate in a weight ratio of 15:10:8.

As top coating composition was applied a usual pigment-containing composition based on an alkyd resin and a melamine resin (available from Herberts under the trademark FD MS 72-609 F).

As synthetic materials for substrates were used butylene terephthalate (substrate A; available from Bayer under the trademark Pocan), a polyester elastomer (substrate B, available from Akzo Plastics under the trademark Arnitel S 74D) and a mixture of polyphenylene oxide and polyamide (substrate C; available from General Electric Plastics under the trademark Noryl GTX). The impact strength of the coated or non-coated synthetic substrate was measured in accordance with DIN 53343, parts 1 and 2, at a temperature of -20°C, use being made of a weight of 10,4 kg and a rate of fall of 4,3 m/s. In each case the ratio of the impact strength of the coated substrate to that of the substrate itself was determined. At ratios of over 0,50, between 0,25 and 0,50 and less than 0,25 the impact strengths of the coated substrate were rated excellent, good and poor, respectively. By "parts" are to be understood herein "parts by weight" and by "%" "percentage by weight". The coating thickness of a composition was determined after drying or curing.

## Example 1

A first primer having a pigment volume concentration of 27,6% and being composed of 16,1 parts of polyester polyol I, 1,8 parts of polyester polyol II, 1,8 parts of polyester polyol III, 26,4 parts of talc, 53,9 parts of solvent and 5 parts of curing agent was sprayed onto a synthetic substrate A to a coating thickness of 35μm and cured for 25 minutes at a temperature of 110°C.

Subsequently, a second primer having a pigment volume concentration of 25,5% and being composed of 10,3 parts of polyester polyol I, 4,3 parts of polyester polyol II, 4,3 parts of polyester polyol III, 30,3 parts of talc, 50,8 parts of solvent and 16,6 parts of curing agent was sprayed onto the first primer to a coating thickness of 35 μm and cured for 25 minutes at a temperrature of 110°C. Finally, the top coating composition was applied by electrostatic spraying to a coating thickness of 30 μm and cured for 25 minutes at a temperature of 110°C. The impact strength of the coated substrate is excellent.

## Comparative Examples A, B and C

In each comparative experiment Example 1 was repeated, except that no use was made of the first primer (Example A) or the second primer (Example B) or that a mixture of the two primers was sprayed onto the substrate as the only primer (Example C) in corresponding amounts to a coating thickness of 70 μm. The impact strength ratings of the coated substrates are poor in all cases.

## Example 2

Example 1 was repeated, except that use was made of substrate B and of a first primer having a pigment volume concentration of 31,0%, and being composed of 15,2 parts of polyester polyol I, 1,7 parts of polyester polyol II, 1,7 parts of polyester polyol III, 33,0 parts of talc, 48,4 parts of solvent and 5 parts of curing agent. Further, the two primers were cured for 40 minutes at a temperature of 90°C. The impact strength of the coated substrate is good.

## Example 3

Example 1 was repeated, except that use was made of substrate C and of a second primer having a pigment volume concentration of 17,4%, and being composed of 12,2 parts of polyester polyol I, 5,1 parts of polyester polyol II, 5,1 parts of polyester polyol III, 22,2 parts of talc, 55,4 parts of solvent and 20 parts of curing agent. The second primer was not applied until 10 minutes after termination of the application of the first primer. The ratio between the logarithm to base 10 of the elasticity modulus at 0°C and 50°C and that at -60°C was 0,77 and 0,62, respectively, for the first primer coating; for the second primer coating the ratio was 0,90 and 0,59 respectively. The impact strength of the coated substrate is excellent.

## Example 4

Example 1 was repeated, except that use was made of substrate C and of a first primer having a pigment volume concentration of 19,6% and being composed of 15,7 parts of polyester polyol I, 1,8 parts of polyester polyol II, 1,8 parts of polyester polyol III, 17,0 parts of talc, 63,7 parts of solvent and 5 parts of curing agent. The second primer used had a pigment volume con centration of 9,1% and was composed of 12,5 parts of polyester polyol I, 5,3 parts of polyester polyol II, 5,3 parts of polyester polyol III, 11,0 parts of talc, 65,9 parts of solvent and 20 parts of curing agent. The impact strength of the coated substrate is excellent.

## Example 5

Example 2 was repeated, except that the second primer used was the one according to Example 3. The impact strength of the coated substrate is good.

## Example 6

Example 4 was repeated, except that substrate A was used instead of substrate C and the second primer employed was the one according to Example 2. The impact strength of the coated substrate is good.

## Comparative Example D

A first primer having a pigment volume concentration of 19,4% and being composed of 15,6 parts of polyester polyol I, 1,7 parts of polyester polyol II, 1,7 parts of polyester polyol III, 14,6 parts of talc, 2,9 parts of titanium dioxide, 63,5 parts of solvent and 5,0 parts of curing agent was sprayed onto a synthetic substrate B to a coating thickness of 35 μm and cured for 25 minutes at a temperature of 110°C.

Subsequently, a second primer having a pigment volume concentration of 9,0% and being composed of 12,5 parts of polyester polyol I, 5,3 parts of polyester polyol II, 5,3 parts of polyester polyol III, 8,7 parts of talc, 3,0 parts of titanium dioxide, 63,2 parts of solvent and 20,0 parts of curing agent was sprayed onto the first primer to a coating thickness of 35 μm and cured for 25 minutes at a temperature of 110°C. Finally, the top coating composition was applied to a thickness of 30 μm by electrostatic spraying and cured for 25 minutes at a temperature of 110°C. The impact strength of the coated substrate is poor.

## Example 7

Example 3 was repeated, example that 4,5 parts of talc in the first primer were replaced by 4,5 parts of an electrically conductive carbon black. The ratio between the logarithm to base 10 of the elasticity modulus at 0°C and 50°C and that at -60°C was 0,68 and 0,55 respectively, for the first primer coating; for the second primer coating the ratio was 0,90 and 0,59, respectively.

## Example 8

Example 7 was repeated, except that use was made of a second primer containing polyester polyol I, II and III in an amount of 9,9, 5,0 and 7,5 parts, respectively.
The ratio between the logarithm to base 10 of the elasticity modulus at 0°C and 50°C and that at -60°C was 0,68 and 0,55, respectively, for the first primer coating; for the second primer coating the ratio was 0,93 and 0,72, respectively.

## Example 9

Example 8 was repeated, except that use was made of a second primer containing polyester polyols I, II and III in an amount of 14,3 4,8 and 3,3 parts, respectively.
The ratio between the logarithm to base 10 of the elasticity modulus at 0°C and 50°C and that at -60°C was 0,68 and 0,55 for the first primer coating; the ratio was 0,88 and 0,66, respectively, for the second primer coating.

## Example 10

Example 7 was repeated, except that use was made of the first primer containing the polyester polyols I, II and III in an amount of 13,2, 2,6 and 3,9 parts, respectively.
The ratio between the logarithm to base 10 of the elasticity modulus at 0°C and 50°C and that at -60°C was 0,81 and 0,62, respectively, for the first primer coating: for the second primer coating the ratio was 0,90 and 0,59, respectively.

## Example 11

Example 10 was repeated, except that use was made of the first primer containing the polyester polyols I, II and III in an amount of 16,8, 1,7 and 1,2 parts, respectively.
The ratio between the logarithm to base 10 of the elasticity modulus at 0°C and 50°C and that at -

60°C was 0,77 and 0,64, respectively, for the first primer coating; the ratio for the second primer coating was 0,90 and 0,59, respectively.

## Comparative example E

Example 1 was repeated, except that no use was made of the second primer whereas the first primer contained the polyester polyols I, II and III in a weight ratio of 2,5:5,0:8,5, namely in amounts of 3,1, 6,2 and 10,4 parts, respectively. The impact strength of the coated substrate is poor.

## Claims for: AT, BE, CH, DE, FR, GB, GR, IT, LI, LU, NL, SE

1. A process for coating a synthetic substrate with a primer and a top coat by successively applying to the substrate a primer and a baking top coating composition and curing these coats by heating the coated synthetic substrate to a temperature of 80°C-140°C, characterized in that a first primer coating is applied in a thickness of 10-50μm, of which after curing the ratio between the logarithm to base 10 of the elasticity modulus at 0°C and 50°C and that at -60°C is in the range of 0,65-0,84 and 0,50-0,65, respectively, and a second primer coating is applied in a thickness of 10-50 μm, of which after curing the ratio between the logarithm to base 10 of the elasticity modulus at 0°C and 50°C and that at -60°C is in the range of 0,85-0,95 and 0,55-0,75, respectively.

2. A process according to claim 1, characterized in that the first primer contains a binder based on:
   A. a linear polyester polyol having a hydroxyl content of 0,8-2,0% by weight and a hydroxyl equivalent weight of 850-2100,
   B. a branched polyester polyol having a hydroxyl content of 4,0-6,0% by weight and a hydroxyl equivalent weight of 280-420, and
   C. a branched polyester polyol having a hydroxyl content of 8,0-10,0% by weight and a hydroxyl equivalent weight of 170-210
   in a weight ratio of A:B of 5-10 and of B:C of 0,7-1,5 and pigment in an amount such that the primer has a pigment volume concentration of 15-35%, the primer containing a curing agent for the components A, B and C in an amount such that the molar ratio between the reactive groups of the curing agent and those of the components A, B and C is in the range of 0,5 to 0,9.

3. A process according to claim 1, characterized in that the second primer contains a binder based on:
   A. a linear polyester polyol having a hydroxyl content of 0,8-2,0% by weight and a hydroxyl equivalent weight of 850-2100,
   B. a branched polyester polyol having a hydroxyl content of 4,0-6,0% by weight and a hydroxyl equivalent weight of 280-420, and
   C. a branched polyester polyol having a hydroxyl content of 8,0-10,0% by weight and a hydroxyl equivalent weight of 170-210
   in a weight ratio of A:B of 2-3 and of B:C of 0,7-1,5 and pigment in an amount such that the primer has a pigment volume concentration of 5-30%, the primer containing a curing agent for the components A, B and C in an amount such that the molar ratio between the reactive groups of the curing agent and those of the components A, B and C is in the range of 1,1, to 2,0.

4. A process according to claims 2 or 3, characterized in that the linear polyester polyol A has a hydroxyl content of 1,0-1,5% by weight and a hydroxyl equivalent weight of 1130-1700.

5. A process according to claims 2 or 3, characterized in that the branched polyester polyol B has a hydroxyl content of 5.0-5,5% by weight and a hydroxyl equivalent weight of 310-340.

6. A process according to claims 2 or 3, characterized in that the branched polyester polyol C has a hydroxyl content of 8,5-9,0% by weight and a hydroxyl equivalent weight of 170-200.

7. A process according to claim 4, characterized in that the linear polyester polyol A is built up from a dihydroxyl compound having 2-12 carbon atoms and a dicarboxylic acid having 3-14 carbon atoms.

8. A process according to claim 7, characterized in that the dicarboxylic acid is adipic acid, optionally in combination with a benzene dicarboxylic acid.

9. A process according to claim 6, characterized in that the branched polyester polyol C is built up from a triol and a dicarboxylic acid having 3-14 carbon atoms.

10. A process according to claim 2, characterized in that the first primer has a pigment volume concentration of 19-29%.

11. A process according to claim 3, characterized in that the second primer has a pigment volume concentration of 9-27%.

12. A process according to claims 2 or 3, characterized in that as curing agent there is used a blocked or non-blocked isocyanurate compound or a blocked or non-blocked aliphatic, cycloaliphatic or aromatic divalent, trivalent or polyvalent isocyanate.

13. A primer based on
A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420, and
C. a branched polyester polyol having a hydroxyl content of 8,0-10,0% by weight and a hydroxyl equivalent weight of 170-210
in a weight ratio of A:B of 5-10 and of B:C of 0,7-1,5 and pigment in an amount such that the primer has a pigment volume concentration of 15-35%.

14. A primer based on
A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420, and
C. a branched polyester polyol having a hydroxyl content of 8,0-10,0% by weight and a hydroxyl equivalent weight of 170-210

in a weight ratio of A:B of 2-3 and of B:C of 0,7-1,5 and pigment in an amount such that the primer has a pigment volume concentration of 5-30%.

## Claims for Spain

1. A process for coating a synthetic substrate with a primer and a top coat by successively applying to the substrate a primer and a baking top coating composition and a curing these coats by heating the coated synthetic substrate to a temperature of 80°C-140°C, characterized in that a first primer coating is applied in a thickness of 10-50 μm, of which after curing the ratio between the logarithm to base 10 of the elasticity modulus at 0°C and 50°C and that at -60°C is in the range of 0,65-0,84 and 0,50-0,65, respectively, and a second primer coating is applied in a thickness of 10-50 μm, of which after curing the ratio between the logarithm to base 10 of the elasticity modulus at 0°C and 50°C and that at -60°C is in the range of 0,85-0,95 and 0,55-0,75, respectively.

2. A process according to claim 1, characterized in that the first primer contains a binder based on:
A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420, and
C. a branched polyester polyol having a hydroxyl content of 8,0-10,0% by weight and a hydroxyl equivalent weight of 170-210
in a weight ratio of A:B of 5-10 and of B:C of 0,7-1,5 and pigment in an amount such that the primer has a pigment volume concentration of 15-35%, the primer containing a curing agent for the components A, B and C in amount such that the molar ratio between the reactive groups of the curing agent and those of the components A, B and C is in the range of 0,5 to 0,9.

3. A process according to claim 1, characterized in that the second primer contains a binder based on:
A. a linear polyester polyol having a hydroxyl content of 0,8-2,0% by weight and a hydroxyl equivalent weight of 850-2100,
B. a branched polyester polyol having a hydroxyl content of 4,0-6,0% by weight and a hydroxyl equivalent weight of 280-420, and
C. a branched polyester polyol having a hydroxyl content of 8,0-10,0% by weight and a hydroxyl equivalent weight of 170-210
in a weight ratio of A:B of 2-3 and of B:C of 0,7-1,5 and pigment in an amount such that the primer has a pigment volume concentration of 5-30%, the primer containing a curing agent for the components A, B and C in an amount such that the molar ratio between the reactive groups of the curing agent and those of the components A, B and C is in the range of 1,1 to 2,0.

4. A process according to claims 2 or 3, characterized in that the linear polyester polyol A has a hydroxyl content of 1,0-1,5% by weight and a hydroxyl equivalent weight of 1130-1700.

5. A process according to claims 2 or 3, characterized in that the branched polyester polyol B has a hydroxyl content of 5,0-5,5% by weight and a hydroxyl equivalent weight of 310-340.

6. A process according to claims 2 or 3, characterized in that the branched polyester polyol C has a hydroxyl content of 8,5-9,0% by weight and a hydroxyl equivalent weight of 170-200.

7. A process according to claim 4, characterized in that the linear polyester polyol A is built up from a dihydroxy compound having 2-12 carbon atoms and a dicarboxylic acid having 3-14 carbon atoms.

8. A process according to claim 7, characterized in that the dicarboxylic acid is adipic acid, optionally in combination with a benzene dicarboxylic acid.

9. A process according to claim 6, characterized in that the branched polyester polyol C is built up from a triol and a dicarboxylic acid having 3-14 carbon atoms.

10. A process according to claim 2, characterized in that the first primer has a pigment volume concentration of 19-29%.

11. A process according to claim 3, characterized in that the second primer has a pigment volume concentration of 9-27%.

12. A process according to claims 2 or 3, characterized in that as curing agent there is used a blocked or non-blocked isocyanurate compound or a blocked or non-blocked aliphatic, cycloaliphatic or aromatic divalent, trivalent or polyvalent isocyanate.

**Patentansprüche für: AT, BE, CH, DE, FR, GB, GR, IT, LI, LU, NL, SE**

1. Verfahren zum Beschichten eines Kunststoffsubstrates mit einer Grundierung und einer Deckschicht durch sukzessives Auftragen einer Grundierung und einer Deckschicht-Einbrennzubereitung auf das Substrat und Härten dieser Beschichtungen durch Erhitzen des beschichteten Kunststoffsubstrates auf eine Temperatur von 80–140°C, dadurch gekennzeichnet, dass eine erste Grundierungsbeschichtung in einer Dicke von 10–50 µm, bei der nach dem Härten das Verhältnis zwischen dem Logarithmus zur Basis 10 des Elastizitätsmoduls bei 0°C und 50°C und dem bei –60°C im Bereich von 0,65 bis 0,84 bzw. 0,50 bis 0,65 liegt, und eine zweite Grundierungsbeschichtung in einer Dicke von 10–50 µm aufgetragen wird, bei welcher nach dem Härten das Verhältnis zwischen dem Logarithmus zur Basis 10 des Elastizitätsmoduls bei 0°C und 50°C und dem bei –60°C im Bereich von 0,85 bis 0,95 bzw. 0,55 bis 0,75 liegt.

2. Verfahren nach Anspruch 1, dadurch gekennzeichnet, dass die erste Grundierung einen Binder enthält auf Basis von:
A. einem linearen Polyesterpolyol mit einem Hydroxylgehalt von 0,8 bis 2,0 Gew.-% und einem Hydroxyläquivalentgewicht von 850–2100,
B. einem verzweigten Polyesterpolyol mit einem Hydroxylgehalt von 4,0 bis 6,0 Gew.-% und einem Hydroxyläquivalentgewicht von 280–420 sowie

C. einem verzweigten Polyesterpolyol mit einem Hydroxylgehalt von 8,0 bis 10,0 Gew.-% und einem Hydroxyläquivalentgewicht von 170–210
in einem Gewichtsverhältnis A:B von 5–10 und B:C von 0,7 bis 1,5 sowie Pigment in einer solchen Menge, dass die Grundierung eine Pigmentvolumenkonzentration von 15-35% hat, wobei die Grundierung ein Härtungsmittel für die Komponenten A, B und C in einer solchen Menge enthält, dass das Molarverhältnis zwischen den reaktiven Gruppen des Härtungsmittels und denen der Komponenten A, B und C im Bereich von 0,5 bis 0,9 liegt.

3. Verfahren nach Anspruch 1, dadurch gekennzeichnet, dass die zweite Grundierung einen Binder enthält auf Basis von:
A. einem linearen Polyesterpolyol mit einem Hydroxylgehalt von 0,8 bis 2,0 Gew.-% und einem Hydroxyläquivalentgewicht von 850-2100,
B. einem verzweigten Polyesterpolyol mit einem Hydroxylgehalt von 4,0 bis 6,0 Gew.-% und einem Hydroxyläquivalentgewicht von 280-420 sowie
C. einem verzweigten Polyesterpolyol mit einem Hydroxylgehalt von 8,0 bis 10,0 Gew.-% und einem Hydroxyläquivalentgewicht von 170-210
in einem Gewichtsverhältnis A:B von 2–3 und B:C von 0,7 bis 1,5 sowie Pigment in einer solchen Menge, dass die Grundierung eine Pigmentvolumenkonzentration von 5-30% hat, wobei die Grundierung ein Härtungsmittel für die Komponenten A, B und C in einer solchen Menge enthält, dass das Molarverhältnis zwischen den reaktiven Gruppen des Härtungsmittels und denen der Komponenten A, B und C im Bereich von 1,1 bis 2,0 liegt.

4. Verfahren nach Anspruch 2 oder 3, dadurch gekennzeichnet, dass das lineare Polyesterpolyol A einen Hydroxylgehalt von 1,0 bis 1,5 Gew.-% und ein Hydroxyläquivalentgewicht von 1130–1700 hat.

5. Verfahren nach Anspruch 2 oder 3, dadurch gekennzeichnet, dass das verzweigte Polyesterpolyol B einen Hydroxylgehalt von 5,0 bis 5,5 Gew.-% und ein Hydroxyläquivalentgewicht von 310–340 hat.

6. Verfahren nach Anspruch 2 oder 3, dadurch gekennzeichnet, dass das verzweigte Polyesterpolyol C einen Hydroxylgehalt von 8,5 bis 9,0 Gew.-% und ein Hydroxyläquivalentgewicht von 170–200 hat.

7. Verfahren nach Anspruch 4, dadurch gekennzeichnet, dass das lineare Polyesterpolyol A aus einer Dihydroxyverbindung mit 2–12 Kohlenstoffatomen und einer Dicarbonsäure mit 3–14 Kohlenstoffatomen aufgebaut ist.

8. Verfahren nach Anspruch 7, dadurch gekennzeichnet, dass die Dicarbonsäure Adipinsäure, gewünschtenfalls in Kombination mit einer Benzoldicarbonsäure, ist.

9. Verfahren nach Anspruch 6, dadurch gekennzeichnet, dass das verzweigte Polyesterpolyol C aus einem Triol und einer Dicarbonsäure mit 3–14 Kohlenstoffatomen aufgebaut ist.

10. Verfahren nach Anspruch 2, dadurch gekennzeichnet, dass die erste Grundierung eine Pigmentvolumenkonzentration von 19–29% hat.

11. Verfahren nach Anspruch 3, dadurch gekennzeichnet, dass die zweite Grundierung eine Pigmentvolumenkonzentration von 9–27% hat.

12. Verfahren nach Anspruch 2 oder 3, dadurch gekennzeichnet, dass als Härtungsmittel eine blockierte oder nicht-blockierte Isocyanuratverbindung oder ein blockiertes oder nichtblockiertes aliphatisches, cycloaliphatisches oder aromatisches, trivalentes oder polyvalentes Isocyanat verwendet wird.

13. Grundierung basierend auf
A. einem linearen Polyesterpolyol mit einem Hydroxylgehalt von 0,8 bis 2,0 Gew.-% und einem Hydroxyläquivalentgewicht von 850–2100,
B. einem verzweigten Polyesterpolyol mit einem Hydroxylgehalt von 4,0 bis 6,0 Gew.-% und einem Hydroxyläquivalentgewicht von 280–420 sowie
C. einem verzweigten Polyesterpolyol mit einem Hydroxylgehalt von 8,0 bis 10,0 Gew.-% und einem Hydroxyläquivalentgewicht von 170–210
in einem Gewichtsverhältnis A:B von 5–10 und B:C von 0,7 bis 1,5 und Pigment in einer solchen Menge, dass die Grundierung eine Pigmentvolumenkonzentration von 15-35% hat.

14. Grundierung basierend auf
A. einem linearen Polyesterpolyol mit einem Hydroxylgehalt von 0,8 bis 2,0 Gew.-% und einem Hydroxyläquivalentgewicht von 850–2100,
B. einem verzweigten Polyesterpolyol mit einem Hydroxylgehalt von 4,0 bis 6,0 Gew.-% und einem Hydroxyläquivalentgewicht von 280–420 sowie
C. einem verzweigten Polyesterpolyol mit einem Hydroxylgehalt von 8,0 bis 10,0 Gew.-% und einem Hydroxyläquivalentgewicht von 170–210 in einem Gewichtsverhältnis A:B von 2–3 und B:C von 0,7 bis 1,5 sowie Pigment in einer solchen Menge, dass die Grundierung eine Pigmentvolumenkonzentration von 5–30% hat.

**Patentansprüche für: Spanien**

1. Verfahren zum Beschichten eines Kunststoffsubstrates mit einer Grundierung und einer Deckschicht durch sukzessives Auftragen einer Grundierung und einer Deckschicht-Einbrennzubereitung auf das Substrat und Härten dieser Beschichtungen durch Erhitzen des beschichteten Kunststoffsubstrates auf eine Temperatur von 80–140°C, dadurch gekennzeichnet, dass eine erste Grundierungsbeschichtung in einer Dicke von 10–50 µm, bei der nach dem Härten das Verhältnis zwischen dem Logarithmus zur Basis 10 des Elastizitätsmoduls bei 0°C und 50°C und dem bei –60°C im Bereich von 0,65 bis 0,84 bzw. 0,50 bis 0,65 liegt, und eine zweite Grundierungsbeschichtung in einer Dicke von 10–50 µm aufgetragen wird, bei welcher nach dem Härten das Verhältnis zwischen dem Logarithmus zur Basis 10 des Elastizitätsmoduls bei 0°C und 50°C und dem bei –60°C im Bereich von 0,85 bis 0,95 bzw. 0,55 bis 0,75 liegt.

2. Verfahren nach Anspruch 1, dadurch gekennzeichnet, dass die erste Grundierung einen Binder enthält auf Basis von:

A. einem linearen Polyesterpolyol mit einem Hydroxylgehalt von 0,8 bis 2,0 Gew.-% und einem Hydroxyläquivalentgewicht von 850–2100,
B. einem verzweigten Polyesterpolyol mit einem Hydroxylgehalt von 4,0 bis 6,0 Gew.-% und einem Hydroxyläquivalentgewicht von 280–420 sowie
C. einem verzweigten Polyesterpolyol mit einem Hydroxylgehalt von 8,0 bis 10,0 Gew.-% und einem Hydroxyläquivalentgewicht von 170–210
in einem Gewichtsverhältnis A:B von 5–10 und B:C von 0,7 bis 1,5 sowie Pigment in einer solchen Menge, dass die Grundierung eine Pigmentvolumenkonzentration von 15-35% hat, wobei die Grundierung ein Härtungsmittel für die Komponenten A, B und C in einer solchen Menge enthält, dass das Molarverhältnis zwischen den reaktiven Gruppen des Härtungsmittels und denen der Komponenten A, B und C im Bereich von 0,5 bis 0,9 liegt.

3. Verfahren nach Anspruch 1, dadurch gekennzeichnet, dass die zweite Grundierung einen Binder enthält auf Basis von:

A. einem linearen Polyesterpolyol mit einem Hydroxylgehalt von 0,8 bis 2,0 Gew.-% und einem Hydroxyläquivalentgewicht von 850–2100,
B. einem verzweigten Polyesterpolyol mit einem Hydroxylgehalt von 4,0 bis 6,0 Gew.-% und einem Hydroxyläquivalentgewicht von 280–420 sowie
C. einem verzweigten Polyesterpolyol mit einem Hydroxylgehalt von 8,0 bis 10,0 Gew.-% und einem Hydroxyläquivalentgewicht von 170–210
in einem Gewichtsverhältnis A:B von 2–3 und B:C von 0,7 bis 1,5 sowie Pigment in einer solchen Menge, dass die Grundierung eine Pigmentvolumenkonzentration von 5–30% hat, wobei die Grundierung ein Härtungsmittel für die Komponenten A, B und C in einer solchen Menge enthält, dass das Molarverhältnis zwischen den reaktiven Gruppen des Härtungsmittels und denen der Komponenten A, B und C im Bereich von 1,1 bis 2,0 liegt.

4. Verfahren nach Anspruch 2 oder 3, dadurch gekennzeichnet, dass das lineare Polyesterpolyol A einen Hydroxylgehalt von 1,0 bis 1,5 Gew.-% und ein Hydroxyläquivalentgewicht von 1130–1700 hat.

5. Verfahren nach Anspruch 2 oder 3, dadurch gekennzeichnet, dass das verzweigte Polyesterpolyol B einen Hydroxylgehalt von 5,0 bis 5,5 Gew.-% und ein Hydroxyläquivalentgewicht von 310–340 hat.

6. Verfahren nach Anspruch 2 oder 3, dadurch gekennzeichnet, dass das verzweigte Polyesterpolyol C einen Hydroxylgehalt von 8,5 bis 9,0 Gew.-% und ein Hydroxyläquivalentgewicht von 170–200 hat.

7. Verfahren nach Anspruch 4, dadurch gekennzeichnet, dass das lineare Polyesterpolyol A aus einer Dihydroxyverbindung mit 2–12 Kohlenstoffatomen und einer Dicarbonsäure mit 3–14 Kohlenstoffatomen aufgebaut ist.

8. Verfahren nach Anspruch 7, dadurch gekennzeichnet, dass die Dicarbonsäure Adipinsäure, gewünschtenfalls in Kombination mit einer Benzoldicarbonsäure, ist.

9. Verfahren nach Anspruch 6, dadurch gekennzeichnet, dass das verzweigte Polyesterpolyol C aus einem Triol und einer Dicarbonsäure mit 3–14 Kohlenstoffatomen aufgebaut ist.

10. Verfahren nach Anspruch 2, dadurch gekennzeichnet, dass die erste Grundierung eine Pigmentvolumenkonzentration von 19–29% hat.

11. Verfahren nach Anspruch 3, dadurch gekennzeichnet, dass die zweite Grundierung eine Pigmentvolumenkonzentration von 9–27% hat.

12. Verfahren nach Anspruch 2 oder 3, dadurch gekennzeichnet, dass als Härtungsmittel eine blockierte oder nicht-blockierte Isocyanuratverbindung oder ein blockiertes oder nicht-blockiertes aliphatisches, cycloaliphatisches oder aromatisches, trivalentes oder polyvalentes Isocyanat verwendet wird.

**Revendications pour les pays contractants: AT, BE, CH, DE, FR, GB, GR, IT, LI, LU, NL, SE**

1. Un procédé de revêtement d'un substrat synthétique à l'aide d'une couche primaire et d'une couche de finition par application successive sur le substrat d'une couche primaire et d'une composition de finition par cuisson, puis traitement thermique de ces revêtements par chauffage du substrat synthétique revêtu à une température de 80°C à 140°C, caractérisé en ce qu'une première couche primaire est appliquée sur une épaisseur de 10 à 50 µm, de sorte qu'après durcissement, le rapport entre le logarithme de base 10 du module d'élasticité à 0°C et 50°C et celui à –60°C soit de l'ordre de 0,65–0,84 et 0,50–0,65, respectivement, puis est appliquée une deuxième couche primaire en une épaisseur de 10 à 50 µm, de sorte qu'après durcissement le rapport entre le logarithme de base 10 du module d'élasticité à O°C et 50°C et celui à –60°C soit de l'ordre de 0,85 à 0,95 et 0,55 à 0,75 respectivement.

2. Un procédé selon la revendication 1, caractérisé en ce que la première couche de primaire contient un liant à base de:

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0% en poids et un poids en équivalents hydroxyle de 170 à 210,

dans lequel un rapport pondéral A:B est de 5 à 10 et B:C de 0,7 à 1,5, et contient un pigment utilisé en une quantité telle que la couche primaire présente une concentration volumique en pigment de 15 à 35%, la couche primaire contenant un agent durcisseur pour les constituants A, B et C en une quantité telle que le rapport molaire entre les groupes réactifs de l'agent durcisseur et ceux des constituants A, B et C soit compris entre 0,5 et 0,9.

3. Un procédé selon la revendication 1, caractérisé en ce que la deuxième couche primaire contient un liant à base de:

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0% en poids et un poids en équivalents hydroxyle de 170 à 210,

dans lequel un rapport pondéral A:B est de 2 à 3 et B:C de 0,7 à 1,5, et contient un pigment utilisé en une quantité telle que la couche primaire présente une concentration volumique en pigment de 5 à 30%, la couche primaire contenant un agent durcisseur pour les constituants A, B et C en une quantité telle que le rapport molaire entre les groupes réactifs de l'agent durcisseur et ceux des constituants A, B et C soit compris entre 1,1 et 2,0.

4. Un procédé selon les revendications 2 ou 3, caractérisé en ce que le polyester polyol linéaire A présente une teneur en hydroxyle de 1,0 à 1.5% en poids et un poids en équivalents hydroxyle de 1130 à 1700.

5. Un procédé selon les revendications 2 ou 3, caractérisé en ce que le polyester polyol ramifié B présente une teneur en hydroxyle de 5,0 à 5,5% en poids et un poids en équivalents hydroxyle de 310 à 340.

6. Un procédé selon les revendications 2 ou 3, caractérisé en ce que le polyester polyol ramifié C présente une teneur en hydroxyle de 8,5 à 9,0% en poids et un poids en équivalents hydroxyle de 170 à 200.

7. Un procédé selon la revendication 4, caractérisé en ce que le polyester polyol linéaire A est obtenu à partir d'un composé dihydroxy comportant 2 à 12 atomes de carbone et un acide dicarboxylique comportant 3 à 14 atomes de carbone.

8. Un procédé selon la revendication 7, caractérisé en ce que l'acide dicarboxylique est l'acide adipique, éventuellement associé à un acide benzènedicarboxylique.

9. Un procédé selon la revendication 6, caractérisé en ce que le polyester polyol ramifié C est obtenu à partir d'un triol et d'un acide dicarboxylique comportant 3 à 14 atomes de carbone.

10. Un procédé selon la revendication 2, caractérisé en ce que la première couche primaire présente une concentration volumique en pigment de 19 à 29%.

11. Un procédé selon la revendication 3, caractérisé en ce que la deuxième couche primaire présente une concentration volumique en pigment de 9 à 27%.

12. Un procédé selon les revendications 2 ou 3, caractérisé en ce qu'en tant qu'agent de durcissement on utilise un isocyanurate bloqué ou non bloqué ou un isocyanate divalent, trivalent ou polyvalent, aliphatique, cyclo-aliphatique ou aromatique, bloqué ou non bloqué.

13. Une couche primaire formée de:

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0 % en poids et un poids en équivalents hydroxyle de 170 à 210,

présentant un rapport pondéral A:B de 5 à 10 et B:C de 0,7 à 1,5, et contenant un pigment utilisé en une quantité telle que la couche primaire présente une concentration volumique en pigment de 15 à 35%.

14. Une couche primaire formée de

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0 % en poids et un poids en équivalents hydroxyle de 170 à 210,

présentant un rapport pondéral A:B de 2 à 3 et B:C de 0,7 à 1,5, et contenant un pigment utilisé en une quantité telle que la couche primaire présente une concentration volumique en pigment de 5 à 30%.

**Revendications pour le pays contractant: SP**

1. Un procédé de revêtement d'un substrat synthétique à l'aide d'une couche primaire et d'une couche de finition par application successive sur le substrat d'une couche primaire et d'une composition de finition par cuisson, puis traitement thermique de ces revêtements par chauffage du substrat synthétique revêtu à une température de 80°C à 140°C, caractérisé en ce qu'une première couche primaire est appliquée sur une épaisseur de 10 à 50 µm, de sorte qu'après durcissement, le rapport entre le logarithme de base 10 du module d'élasticité à 0°C et 50°C et celui à –60°C soit de l'ordre de 0,65–0,84 et 0,50–0,65, respectivement, puis est appliquée une deuxième couche primaire en une épaisseur de 10 à 50 µm, de sorte qu'après durcissement le rapport entre le logarithme de base 10 du module d'élasticité à 0°C et 50°C et celui à –60°C soit de l'ordre de 0,85 à 0,95 et 0,55 à 0,75, respectivement.

2. Un procédé selon la revendication 1, caractérisé en ce que la première couche de primaire contient un liant à base de:

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0% en poids et un poids en équivalents hydroxyle de 170 à 210,

dans lequel un rapport pondéral A:B est de 5 à 10 et B:C de 0,7 à 1,5, et contient un pigment utilisé en une quantité telle que la couche primaire présente une concentration volumique en pigment de 15 à 35%, la couche primaire contenant un agent durcisseur pour les constituants A, B et C en une quantité telle que le rapport molaire entre les groupes réactifs de l'agent durcisseur et ceux des constituants A, B et C soit compris entre 0,5 et 0,9.

3. Un procédé selon la revendication 1, caractérisé en ce que la deuxième couche primaire contient un liant à base de:

A. un polyester polyol linéaire ayant une teneur en hydroxyle de 0,8 à 2,0% en poids et un poids en équivalents hydroxyle de 850 à 2100,

B. un polyester polyol ramifié ayant une teneur en hydroxyle de 4,0 à 6,0% en poids et un poids en équivalents hydroxyle de 280 à 420, et

C. un polyester polyol ramifié présentant une teneur en hydroxyle de 8,0 à 10,0% en poids et un poids en équivalents hydroxyle de 170 à 210,

dans lequel un rapport pondéral A:B est de 2 à 3 et B:C de 0,7 à 1,5, et contient un pigment utilisé en une quantité telle que la couche primaire présente une concentration volumique en pigment de 5 à 30%, la couche primaire contenant un agent durcisseur pour les constituants A, B et C en une quantité telle que le rapport molaire entre les groupes réactifs de l'agent durcisseur et ceux des constituants A, B et C soit compris entre 1,1 et 2,0.

4. Un procédé selon les revendications 2 ou 3, caractérisé en ce que le polyester polyol linéaire A présente une teneur en hydroxyle de 1,0 à 1,5% en poids et un poids en équivalents hydroxyle de 1130 à 1700.

5. Un procédé selon les revendications 2 ou 3, caractérisé en ce que le polyester polyol ramifié B présente une teneur en hydroxyle de 5,0 à 5,5% en poids et un poids en équivalents hydroxyle de 310 à 340.

6. Un procédé selon les revendications 2 ou 3, caractérisé en ce que le polyester polyol ramifié C présente une teneur en hydroxyle de 8,5 à 9,0% en poids et un poids en équivalents hydroxyle de 170 à 200.

7. Un procédé selon la revendication 4, caractérisé en ce que le polyester polyol linéaire A est obtenu à partir d'un composé dihydroxy comportant 2 à 12 atomes de carbone et un acide dicarboxylique comportant 3 à 14 atomes de carbone.

8. Un procédé selon la revendication 7, caractérisé en ce que l'acide dicarboxylique est l'acide adipique, éventuellement associé à un acide benzenedicarboxylique.

9. Un procédé selon la revendication 6, caractérisé en ce que le polyester polyol ramifié C est obtenu à partir d'un triol et d'un acide dicarboxylique comportant 3 à 14 atomes de carbone.

10. Un procédé selon la revendication 2, caractérisé en ce que la première couche primaire présente une concentration volumique en pigment de 19 à 29 %.

11. Un procédé selon la revendication 3, caractérisé en ce que la deuxième couche primaire présente une concentration volumique en pigment de 9 à 27%.

12. Un procédé selon les revendications 2 ou 3, caractérisé en ce qu'en tant qu'agent de durcissement on utilise un isocyanurate bloqué ou non bloqué ou un isocyanate divalent, trivalent ou polyvalent, aliphatique, cyclo-aliphatique ou aromatique, bloqué ou non bloqué.